# FASCICULE DE BREVET EUROPEEN

(11) **EP 2 041 027 B1**
(45) Date de publication et mention de la délivrance du brevet: **28.09.2011**
(21) Numéro de dépôt: 07765657.7
(22) Date de dépôt: 27.06.2007
(51) Int. Cl.: C01B 33/193, D21H 17/68

(54) **SILICE PRECIPITEE POUR APPLICATION PAPIER**
FÄLLUNGSKIESELSÄURE FÜR DIE PAPIERANWENDUNG
PRECIPITATED SILICA FOR PAPER APPLICATION

(30) Priorité: 27.06.2006 FR 0605763
(43) Date de publication de la demande: 01.04.2009
(73) Titulaire: Rhodia Opérations, 93306 Aubervilliers (FR)
(72) Inventeur: LAHARY, Pierre-Yves, 69006 Lyon (FR); CHEVALLIER, Yvonick, 06530 Speracedes (FR); VALERO, Rémi, 01390 Saint Jean de Thurigneux (FR)
(74) Mandataire: Delenne, Marc
(86) Numéro de dépôt international: PCT/EP2007/056402
(87) Numéro de publication internationale: WO 2008/000761

(56) Documents cités:
- EP-A- 0 552 065
- WO-A-2004/014795
- JP-A- 1 156 594
- US-A- 4 336 245
- US-A- 5 968 470

## Description

La présente invention est relative à des silices précipitées particulières, présentant notamment une porosité spécifique.

Elle concerne également leur procédé de préparation.

Elle est en outre relative à leurs utilisations, de préférence dans l'industrie papetière, notamment comme charges pour papier, en particulier dans l'application couchage de papier pour impression jet d'encre.

On sait que certaines silices peuvent être employées dans la fabrication du papier, soit comme charge de masse pour des papiers courants type papiers journaux, soit comme charge de couchage pour des papiers spéciaux nécessitant une plus haute qualité de surface, tels que par exemple les papiers pour imprimantes à jet d'encre couleur.

Incorporées dans la masse du papier, des silices peuvent permettre d'améliorer l'une ou plusieurs des propriétés suivantes : opacité, blancheur, densité, porosité, propriétés mécaniques, imprimabilité,...

Certains papiers, en particulier ceux dits papiers spéciaux, doivent également présenter une grande qualité de surface.

C'est le cas notamment des papiers pour imprimantes à jet d'encre couleur, auxquels il est demandé une reproduction couleur de grande définition. Cet état de surface peut alors être obtenu par couchage (ou enduction) des feuilles de papier par un bain de couchage à base de silice.

Même si les silices mises au point à ce jour conviennent sur certains points pour une application en papeterie, elles peuvent présenter encore néanmoins certains inconvénients, notamment pour le couchage de papier pour imprimantes à jet d'encre couleur.

Le but principal de l'invention est de fournir une silice qui soit une alternative aux silices connues et qui présente de bonnes propriétés au niveau de l'application papier, en particulier pour le couchage de papier pour impression jet d'encre.

Ainsi, la présente invention a pour objet notamment une silice précipitée caractérisée en ce qu'elle présente :
- une prise d'huile DOP inférieure à 260 ml/100g,
- un volume poreux (V_{d25}), formé par les pores de diamètre inférieur à 25 nm, supérieur à 0,8 ml/g,
- une surface spécifique CTAB supérieure à 280 m²/g.

Dans l'exposé qui suit, la prise d'huile DOP est déterminée selon la norme ISO 787/5 en mettant en oeuvre du dioctylphtalate (la mesure est effectuée sur le produit tel quel (non séché)).

Le volume poreux (V_{d25}) et la taille des pores sont déterminés par la méthode de Barett, Joyner et Halenda, dite méthode BJH, décrite notamment, par F. Rouquerol, L. Luciani, P. Llewwellyn, R. Denoyel et J. Rouquerol, dans « Les Techniques de l'Ingénieur », septembre 2001. Dans le présent exposé ne sont pris en considération que les pores présentant un diamètre inférieur à 25 nm.

La surface spécifique CTAB est la surface externe déterminée selon la norme NF T 45007 (novembre 1987).

La surface spécifique BET est déterminée selon la méthode de Brunauer - Emmett - Teller décrite dans « The journal of the American Chemical Society », Vol. 60, page 309, février 1938 et correspondant à la norme NF ISO 9277 (décembre 1996).

La taille médiane des particules (d50), en masse, peut être déterminée par diffraction laser selon la norme NF X 11-666. La mesure est effectuée à l'aide d'un granulomètre MALVERN MASTERSIZER 2000 (de Malvern Instruments) et de son échantillonneur de suspension Hydro 2000G, en présence d'ultrasons. Lors de la mesure, le paramétrage de l'échantilloneur est le suivant : pompe règlée sur 1250 tours/min, agitation réglée sur 500 tours/min et niveau d'ultrasonification réglé sur 20 % ; le modèle «Fraunhofer» est sélectionné et la quantité de silice introduite dans le liquide de mesure (eau déminéralisée) est telle que l'obscuration avant la mesure est située entre 10 et 20 % ; la durée de la mesure est de 20 secondes.

Le pH est mesuré selon la norme ISO 787/9 (pH d'une suspension à 5 % en poids de silice dans de l'eau désionisée).

L'humidité est la teneur en eau résiduelle mesurée selon la norme ISO 787/2, après traitement thermique à 105 °C pendant 2 heures.

La silice précipitée selon l'invention présente une porosité particulière.

Elle possède une prise d'huile DOP inférieure à 260 ml/100g, de préférence inférieure à 240 ml/100g, en particulier inférieure à 225 ml/100g.

Sa prise d'huile DOP peut être notamment inférieure à 210 ml/100g, par exemple inférieure à 205 ml/100g.

Elle est en général supérieure à 145 ml/100g, par exemple supérieure à 180 ml/100g.

Son volume poreux (V_{d25}), formé par les pores de diamètre inférieur à 25 nm, est supérieur à 0,8 ml/g, de préférence supérieur à 0,9 ml/g, en particulier d'au moins 0,95 ml/g.

Il peut être d'au moins 1,0 ml/g, notamment d'au moins 1,05 ml/g, par exemple supérieur à 1,1 ml/g.

Il est en général inférieur à 1,7 ml/g, en particulier inférieur à 1,5 ml/g.

La silice selon l'invention présente une surface spécifique CTAB supérieure à 280 m²/g, de préférence supérieure à 300 m²/g ; elle peut être en particulier supérieure à 330 m²/g, par exemple supérieure à 350 m²/g.

Elle est généralement inférieure à 450 m²/g, notamment inférieure à 400 m²/g_{.}

La surface spécifique CTAB de la silice selon l'invention peut être comprise strictement entre 330 et 400 m²/g, en particulier comprise strictement entre 350 et 400 m²/g, par exemple comprise entre 355 et 390 m²/g.

En général, la silice précipitée selon l'invention présente une surface spécifique BET supérieure à 450 m²/g, en particulier supérieure à 510 m²/g ; elle peut être notamment supérieure à 540 m²/g, par exemple supérieure à 650 m²/g, voire à 800 m²/g.

Sa surface spécifique BET est habituellement inférieure à 1200 m²/g, en particulier inférieure à 1000 m²/g, notamment d'au plus 900 m²/g.

De manière préférée, la porosité de la silice selon l'invention est telle que celle-ci présente un diamètre de pores (dp), pour les pores de diamètre inférieur à 25 nm, pris au maximum de la distribution de taille de pores en volume (mode), inférieur à 12,0 nm, en particulier inférieur à 8,0 nm, notamment inférieur à 7,0 nm, par exemple inférieur à 6,5 nm ; celui-ci peut être inférieure à 5,5 nm, voire inférieure à 3,0 nm.

Sa teneur en aluminium est, en général, inférieure à 2800 ppm, en particulier inférieure à 1500 ppm, notamment inférieure à 1000 ppm. Elle est de préférence inférieure à 500 ppm, par exemple inférieure à 200 ppm.

La silice précipitée selon la présente invention peut présenter une taille médiane de particules (d50) d'au plus 20 µm, de préférence comprise entre 0,5 et 20 µm, en particulier entre 2 et 15 µm, notamment entre 3,5 et 12 µm, par exemple entre 6 et 10,5 µm, voire entre 9,5 et 10,5 µm. Ceci se révèle particulièrement avantageux lorsqu'elle est destinée à être employée comme charge (pigment) de couchage, par exemple dans un bain de couchage, pour papier, en particulier pour papier pour imprimantes à jet d'encre (noire et/ou couleur), notamment à jet d'encre couleur.

La silice selon l'invention peut posséder, particulièrement lorsqu'elle est destinée à l'utilisation indiquée ci-sessus :
- une prise d'huile DOP inférieure à 205 ml/100g,
- un volume poreux (V_{d25}), formé par les pores de diamètre inférieur à 25 nm, d'au moins 0,95 ml/g, en particulier d'au moins 1,0 ml/g, notamment d'au moins 1,05 ml/g,
- une surface spécifique CTAB comprise strictement entre 330 et 400 m²/g, en particulier comprise strictement entre 350 et 400 m²/g, par exemple comprise entre 355 et 390 m²/g,
- une surface spécifique BET supérieure à 510 m²/g,
- un diamètre de pores (dp), pour les pores de diamètre inférieur à 25 nm, pris au maximum de la distribution de taille de pores en volume (mode), inférieur à 12,0 nm, en particulier inférieur à 8,0 nm,
- une taille médiane de particules (d50) comprise entre 6 et 10,5 µm, notamment entre 9,5 et 10,5 µm.

De manière générale, la silice selon l'invention présente un pH compris entre 2,5 et 8,5, notamment entre 2,7 et 8,0.

Son pH est préférentiellement compris entre 2,5 et 6,0, par exemple entre 2,7 et 5,8 ou entre 2,7 et 4,3. Il peut être également compris entre 6,0 et 8,5, notamment entre 7,0 et 8,0, par exemple entre 7,2 et 7,8.

L'humidité de la silice selon l'invention peut être généralement d'au plus 13,0 % en poids, en particulier d'au plus 11,5 % en poids, notamment d'au plus 10,5 % en poids. Elle peut par exemple être d'au plus 10,0 % en poids, voire d'au plus 8,0 % en poids ou même inférieure à 6,0 % en poids.

La teneur en sel soluble (ou anion résiduel), exprimée en sulfate de sodium, de la silice selon l'invention peut être, de préférence, inférieure à 4,0 % en poids, en particulier inférieure à 3,5 % en poids. Elle peut être notamment inférieure à 2,0 % en poids, par exemple inférieure à 1,0 % en poids.

La silice selon l'invention se présente habituellement sous forme de poudre.

L'invention a également pour objet une suspension aqueuse de silice précipitée, caractérisée en qu'elle comprend au moins une silice précipitée selon l'invention, telle que décrite dans l'exposé ci-dessus.

Cette suspension peut être obtenue par mise en suspension dans de l'eau d'au moins une silice selon l'invention.

Cette suspension peut également être directement issue du procédé de préparation de la silice selon l'invention, notamment avant l'étape de séchage. Elle peut en particulier être constituée par un gâteau de filtration issu de la réaction de précipitation de la silice selon l'invention et délité ; en d'autres termes, on réalise la précipitation de la silice, on filtre la bouillie obtenue, on obtient un gâteau de filtration qui est lavé si nécessaire, et ledit gâteau est ensuite délité.

La suspension aqueuse de silice précipitée peut être traitée par broyage humide, et/ou, éventuellement, stabilisée/protégée par un biocide.

Elle peut présenter, par exemple, une teneur en silice comprise entre 5 et 50 % en poids.

Un autre objet de l'invention consiste en un procédé de préparation d'une silice précipitée conforme à l'invention, comprenant la réaction d'un silicate avec un agent acidifiant ce par quoi l'on obtient une suspension de silice précipitée, puis la séparation et le séchage de cette suspension, caractérisé en ce que la réaction du silicate avec l'agent acidifiant est réalisée selon les étapes successives suivantes :
(i) on forme un pied de cuve initial comportant une partie de la quantité totale du silicate engagé dans la réaction (notamment en mélangeant de l'eau et du silicate), la concentration en silicate (exprimée en SiO₂) dans ledit pied de cuve initial étant comprise entre 10 et 50 g/L, de préférence entre 12 et 48 g/L, et la température dudit pied de cuve initial étant comprise entre 40 et 65 °C, notamment entre 45 et 55 °C,
(i') éventuellement, on ajoute audit pied de cuve de l'agent acidifiant, pendant 5 à 30 minutes, en particulier pendant 10 à 20 minutes, jusqu'à l'obtention d'une valeur du pH du milieu réactionnel comprise entre 3,5 et 8,5,
(ii) on ajoute audit pied de cuve, de manière simultanée, de l'agent acidifiant et la quantité restante du silicate, pendant 20 à 150 minutes, en particulier pendant 30 à 120 minutes, par exemple entre 70 et 120 minutes, le rapport quantité de silicate ajoutée (exprimée en SiO₂) / quantité de silicate présente dans le pied de cuve initial (exprimée en SiO₂) étant supérieur à 5 :
   a) soit à des débits constants conduisant à l'issue de cette addition simultanée à une valeur de pH du milieu réactionnel comprise entre 3,5 et 8,5,
   b) soit à un débit d'agent acidifiant régulé de manière à maintenir le pH du milieu réactionnel à une valeur constante et comprise entre 3,5 et 8,5,
(iii) on ajoute au milieu réactionnel, dans le cas où la valeur du pH du milieu réactionnel à l'issue de l'étape (ii) est supérieure à 6,0, de l'agent acidifiant, pendant 3 à 25 minutes, de manière à atteindre une valeur de pH du milieu réactionnel comprise entre 3,5 et 6,0,
(iv) on maintient le milieu réactionnel, obtenu à l'issue de l'étape précédente, sous agitation pendant 5 à 60 minutes, par exemple pendant 6 à 20 minutes (étape de vieillissement).

Il a été ainsi trouvé que la succession d'étapes particulières constituaient des conditions importantes pour conférer aux produits obtenus leurs caractéristiques et propriétés particulières, notamment dans une utilisation dans l'industrie papetière, en particulier comme charge pour papier, plus spécifiquement comme charge de couchage, par exemple dans un bain de couchage, pour papier, comme le papier pour imprimantes à jet d'encre (noire et/ou couleur), notamment à jet d'encre couleur.

On utilise généralement comme agent acidifiant un acide minéral fort tel que l'acide sulfurique, l'acide nitrique ou l'acide chlorhydrique, ou un acide organique tel que l'acide acétique, l'acide formique ou l'acide carbonique.

L'agent acidifiant peut être dilué ou concentré ; sa normalité peut être comprise entre 0,4 et 36 N, par exemple entre 0,6 et 1,5 N.

En particulier, dans le cas où l'agent' acidifiant est l'acide sulfurique, sa concentration peut être comprise entre 40 et 180 g/L, par exemple entre 60 et 150 g/L.

On peut par ailleurs utiliser en tant que silicate toute forme courante de silicates tels que métasilicates, disilicates et avantageusement un silicate de métal alcalin, notamment le silicate de sodium ou de potassium.

Le silicate peut présenter une concentration (exprimée en SiO₂) comprise entre 40 et 330 g/L, par exemple entre 60 et 300 g/L, en particulier entre 60 et 250 g/L.

De manière générale, on emploie, comme agent acidifiant, l'acide sulfurique, et, comme silicate, le silicate de sodium.

Dans le cas où l'on utilise le silicate de sodium, celui-ci présente, en général, un rapport pondéral SiO₂/Na₂O compris entre 2,5 et 4, par exemple entre 3,0 et 3,7.

On utilise habituellement le même agent acidifiant et le même silicate dans l'ensemble du procédé selon l'invention.

De manière préférée, aucun électrolyte n'est ajouté dans l'étape (i), et, de manière plus générale, dans le procédé selon l'invention.

Le terme d'électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le chlorure de sodium dans le cas de la réaction d'un silicate de sodium avec l'acide chlorhydrique ou, de préférence, le sulfate de sodium dans le cas de la réaction d'un silicate de sodium avec l'acide sulfurique.

La concentration en silicate (exprimée en SiO₂) dans ledit pied de cuve initial (étape (i)) est, de manière préférée, comprise entre 15 et 45 g/L, en particulier entre 20 et 45 g/L, notamment entre 25 et 45 g/L. Elle est par exemple comprise entre 25 et 40 g/L.

De préférence, l'addition simultanée dans l'étape (ii) est telle que le taux de consolidation, c'est-à-dire le rapport quantité de silicate ajoutée (exprimée en SiO₂) / quantité de silicate présente dans le pied de cuve initial (exprimée en SiO₂), est d'au moins 6, en particulier supérieur à 8, par exemple supérieur à 10, voire à 15.

Ce taux de consolidation est généralement d'au plus 30, notamment d'au plus 20, voire d'au plus 16.

En plus de l'étape (i), chacune des autres étapes de la réaction du silicate avec l'agent acidifiant (étape optionnelle (i'), étapes (ii), (iii) et (iv)) est, en général, effectuée à une température du milieu réactionnel comprise entre 40 et 65 °C, notamment entre 45 et 55 °C.

Selon une variante de l'invention, l'ensemble de la réaction du silicate avec l'agent acidifiant est réalisé à une température constante, comprise entre 40 et 65 °C, notamment entre 45 et 55 °C.

De même, l'ensemble de la réaction du silicate avec l'agent acidifiant est, en général, effectué sous agitation du milieu ractionnel. De préférence, l'agitation est alors plutôt élevée et peut correspondre à une puissance spécifique d'au moins 1,5 KW/m³, en particulier d'au moins 2 KW/m³ (énergie transférée par l'intermédiaire de l'agitation à 1 m³ de milieu réactionnel).

L'enceinte réactionnelle dans laquelle est mis en oeuvre l'ensemble de la réaction du silicate avec l'agent acidifiant est habituellement muni d'un équipement d'agitation et d'un équipement de chauffage adéquats.

On obtient, à l'issue des étapes qui viennent d'être décrites, une suspension (ou bouillie) de silice qui est ensuite séparée (séparation liquide-solide).

La séparation mise en oeuvre dans le procédé de préparation selon l'invention comprend habituellement une filtration, suivie d'un lavage si nécessaire. La filtration s'effectue selon toute méthode convenable, par exemple au moyen d'un filtre sous vide, d'un filtre presse, d'un filtre à bande,.

La suspension de silice ainsi récupérée (gâteau de filtration) est ensuite séchée.

De préférence, le séchage se fait par atomisation. A cet effet, on peut utiliser tout type d'atomiseur convenable, notamment un atomiseur à turbines, à buses, à pression liquide ou à deux fluides. En général, lorsque la filtration est effectuée à l'aide d'un filtre presse, on utilise un atomiseur à buses, et, lorsque la filtration est effectuée à l'aide d'un filtre sous-vide, on utilise un atomiseur à turbines.

Il y a lieu de noter que le gâteau de filtration n'est pas toujours dans des conditions permettant un pompage vers l'atomiseur et puis une atomisation notamment à cause de sa viscosité élevée. D'une manière connue en soi, on soumet alors le gâteau à une opération de délitage, préalablement à l'atomisation. Cette opération de fluidification peut être ici réalisée mécaniquement, avec ou sans ajout d'eau, par exemple par passage du gâteau dans un broyeur de type «à billes», en présence ou, de préférence, en absence d'un composé d'aluminium, ou à la fois mécaniquement et chimiquement avec ajout d'un acide, en particulier d'un acide carboxylique. Un acide carboxylique peut être mélangé ou ajouté au gâteau de filtration avant ou au cours de l'opération de délitage. Lorsque l'on emploie un acide carboxylique, celui-ci peut être choisi parmi l'acide maléïque, l'acide formique, l'acide acétique, l'acide octanoïque, l'acide oxalique, l'acide propionique, l'acide succinique. L'opération de délitage permet notamment d'abaisser la viscosité de la suspension à atomiser ultérieurement.

La silice séchée (notamment par un atomiseur à turbines) peut éventuellement être soumise à une étape d'agglomération, par exemple par une compression directe, une extrusion ou, de préférence, un compactage à sec. Lorsque l'on met en oeuvre cette dernière technique, il peut s'avérer opportun, avant de procéder au compactage, de désaérer (opération appelée également pré-densification ou dégazage) les produits pulvérulents de manière à éliminer l'air inclus dans ceux-ci et assurer un compactage plus régulier. La silice susceptible d'être alors obtenue par cette étape d'agglomération se présente généralement sous la forme de granulés.

De manière préférée, notamment pour une utilisation de la silice obtenue comme charge de couchage, par exemple dans un bain de couchage, pour papier, comme le papier pour imprimantes à jet d'encre, notamment à jet d'encre couleur, la silice précipitée issue de l'étape de séchage, puis éventuellement agglomérée, est ensuite micronisée ou, de préférence, broyée.

La micronisation peut être effectuée avec un microniseur, comme un broyeur à jet d'air, éventuellement fluidisé.

Le broyage peut être mis en oeuvre en particulier à l'aide d'un broyeur mécanique, par exemple du type ACM, Forplex, notamment un broyeur sélecteur à marteaux.

Le Demandeur a constaté que les silices précipitées selon l'invention ou susceptibles d'être obtenues par le procédé selon l'invention, ainsi que les suspensions aqueuses les contenant (et présentant, par exemple, une teneur en silice comprise entre 5 et 50 % en poids), peuvent trouver une application très intéressante dans l'industrie papetière, en particulier comme charge pour papier, plus spécifiquement comme charge de couchage, par exemple dans un bain de couchage, pour papier, comme le papier pour imprimantes à jet d'encre (en particulier noire et/ou couleur), notamment à jet d'encre couleur. Ceci est plus spécialement le cas lorsque la silice précipitée présente une taille médiane de particules (d50) d'au plus 20 µm, de préférence comprise entre 0,5 et 20 µm, en particulier entre 2 et 15 µm, notamment entre 3,5 et 12 µm, par exemple entre 6 et 10,5 µm, voire entre 9,5 et 10,5 µm.

Elles permettent notamment de manière avantageuse, lors de l'utilisation dans une formulation de bain de couchage pour papier pour imprimantes à jet d'encre, d'obtenir un faible poussiérage ou pas de poussiérage du tout du papier couché, un séchage rapide du papier couché pendant et après l'impression et de très bonnes densité optique et précision de l'impression.

La quantité de silice selon l'invention ou susceptible d'être préparée par le procédé selon l'invention pouvant être mise en oeuvre pour le couchage du papier peut par exemple être comprise entre 1,5 et 25 % en poids, par rapport au poids du papier non couché, et ce en fonction du grammage du papier non couché.

L'invention est également relative à un bain de couchage pour papier, en particulier pour papier pour imprimantes à jet d'encre (notamment noire et/ou couleur), caractérisé en ce qu'il comprend une silice ou une suspension selon l'invention.

En général, le bain de couchage comprend, outre la silice (ou suspension de silice), au moins un alcool polyvinylique (et/ou un dérivé de l'amidon, un dérivé de la cellulose, un latex) et au moins un fixateur cationique (par exemple un polyDADMAC, un méthylolamide).

L'invention concerne aussi un procédé pour améliorer les qualités d'impression du papier caractérisé en ce qu'il met en oeuvre à titre de charge pour papier une silice selon l'invention ou susceptible d'être obtenue par le procédé selon l'invention, ou une suspension de silice selon l'invention.

Les silices selon l'invention peuvent être également employées dans d'autres applications, par exemple :
- à titre de charge de couchage pour papier thermique,
- à titre de charge dans la masse du papier (pâte à papier),
- à titre de support de liquide (par exemple employé dans l'alimentation animale, comme les acides (acide lactique notamment), les pigments, les arômes, les vitamines (vitamine E notamment), le chlorure de choline), de support de solide, notamment de support de catalyseur,
- à titre d'agent absorbant et/ou masqueur d'odeur, notamment dans les litières pour chat,
- à titre d'agent dessiquant,
- à titre d'additif pour encres,
- à titre de clarificateur et/ou de stabilisateur de la bière et du vin,
- à titre d'agent anti-mottant, d'agent de mattage, d'additif pour peinture, d'agent antibloquant (par exemple film PETP) et antiglissant,
- pour la chromatographie,
- pour l'adsorption de liquide ou de gaz (notamment dans les filtres à cigarettes), en particulier pour l'adsorption sélective de composants liquides ou gazeux,
- pour la préparation de séparateurs de batterie (polyéthylène ou caoutchouc) ; pour la gélification de l'acide sulfurique (agent rhéologique, épaississant).

Les exemples suivants illustrent l'invention sans toutefois en limiter la portée.

### EXEMPLE 1

Dans un réacteur de 80 litres muni d'un système d'agitation et de chauffage on introduit :
- 3,5 kg de silicate de sodium de densité égale à 1,23 Kg/L et de rapport pondéral SiO₂/Na₂O égal à 3,47, et
- 18 litres d'eau.

La concentration en silicate (exprimée en SiO₂) dans le pied de cuve initial est de 32 g/L.

La solution obtenue est portée sous agitation à 50 °C, température à laquelle est effectué l'ensemble de la réaction. On introduit ensuite pendant 14 minutes de l'acide sulfurique dilué (densité : 1,05 Kg/L) à un débit de 305 g/min. Puis on introduit de façon simultanée pendant 100 minutes du silicate de sodium, tel que décrit ci-dessus, à un débit de 240 g/min et de l'acide sulfurique dilué (densité : 1,05 Kg/L) à un débit régulé de façon à avoir un pH égal à 4,0 +/- 0,1 (taux de consolidation à l'issue de cette addition simultanée : 6,9). On arrête ensuite l'introduction d'acide et de silicate et on maintient pendant 10 minutes sous agitation le milieu réactionnel. La bouillie réactionnelle est filtrée sous vide, le gâteau obtenu est lavé. Le gâteau résultant est fluidifié par action mécanique et séché par atomisation (atomiseur à turbines).

La silice séchée est ensuite micronisée (au moyen d'un microniseur JET PULVERIZER).

La silice précipitée obtenue (S1) se présente sous forme de poudre et possède les caractéristiques suivantes :
- prise d'huile DOP 202 ml/100g
- volume poreux (V_{d25}) 1,02 ml/g
- surface spécifique CTAB 383 m²/g
- surface spécifique BET 872 m²/g
- diamètre de pores (dp) 5,0 nm
- taille médiane de particules (d50) 7,9 µm
- pH 4,1
- humidité 7,0 %
- teneur en sel soluble (Na₂SO₄) 0,9 %

### EXEMPLE 2

Dans un réaµcteur de 80 litres muni d'un système d'agitation et de chauffage on introduit :
- 3,5 kg de silicate de sodium de densité égale à 1,23 Kg/L et de rapport pondéral SiO₂/Na₂O égal à 3,47, et
- 18 litres d'eau.

La concentration en silicate (exprimée en SiO₂) dans le pied de cuve initial est de 32 g/L.

La solution obtenue est portée sous agitation à 50 °C, température à laquelle est effectué l'ensemble de la réaction. On introduit ensuite pendant 65 minutes de l'acide sulfurique dilué (densité : 1,05 Kg/L) à un débit de 240 g/min. Puis on introduit de façon simultanée pendant 100 minutes l'acide sulfurique dilué (densité : 1,05 Kg/L) à un débit de 165 g/min et du silicate de sodium, tel que décrit ci-dessus, à un débit de 240 g/min (taux de consolidation à l'issue de cette addition simultanée : 6,9). On arrête ensuite l'introduction de silicate et on poursuit pendant 5 minutes l'introduction d'acide à un débit de 240 g/min. On maintient ensuite pendant 10 minutes sous agitation le milieu réactionnel. La bouillie réactionnelle est filtrée sous vide, le gâteau obtenu est lavé. Le gâteau résultant est fluidifié par action mécanique et séché par atomisation (atomiseur à turbines).

La silice précipitée obtenue (S2) se présente sous forme de poudre et possède les caractéristiques suivantes :
- prise d'huile DOP 189 ml/100g
- volume poreux (V_{d25}) 1,07 ml/g
- surface spécifique CTAB 371 m²/g
- surface spécifique BET 513 m²/g
- diamètre de pores (dₚ) 10,6 nm
- taille médiane de particules (d50) 27,8 µm
- pH 2,9
- humidité 11,1 %
- teneur en sel soluble (Na₂SO₄) 3,3 %

### EXEMPLE 3

Dans un réacteur de 2000 litres muni d'un système d'agitation et de chauffage on introduit :
- 89 litres de silicate de sodium de densité 1,23 Kg/L et de rapport pondéral SiO₂/Na₂O égal à 3,47, et
- 525 litres d'eau.

La concentration en silicate (exprimée en SiO₂) dans le réacteur est alors de 40 g/L.

La solution obtenue est portée sous agitation à 50 °C, température à laquelle est effectué l'ensemble de la réaction. L'agitation est forte et correspond à une énergie spécifique de 2,5 KW/m³. On introduit ensuite pendant 16 minutes de l'acide sulfurique dilué (densité : 1,05 Kg/L) à un débit de 305 g/min. On ajoute ensuite 100 litres d'eau dans le milieu réactionnel. Puis on introduit de façon simultanée pendant 85 minutes du silicate de sodium, tel que décrit ci-dessus, à un débit de 320 L/h, et de l'acide sulfurique dilué (densité : 1,05 Kg/L) à un débit régulé de façon à avoir un pH égal à 5,5 +/- 0,1. On arrête ensuite l'introduction d'acide et de silicate et on maintient pendant 5 minutes sous agitation le milieu réactionnel. La bouillie réactionnelle est filtrée sur un filtre presse. Le gâteau résultant est fluidifié par action chimique en utilisant de l'acide formique (rapport en poids acide formique / silice de 0,66 %) et séché par atomisation (atomiseur à buses).

La silice séchée est ensuite micronisée (au moyen d'un microniseur JET PULVERIZER).

La silice précipitée obtenue (S3) se présente sous forme de poudre et possède les caractéristiques suivantes :
- prise d'huile DOP 205 ml/100g
- volume poreux (V_{d25}) 1,0 ml/g
- surface spécifique CTAB 360 m²/g
- surface spécifique BET 707 m²/g
- diamètre de pores (dₚ) 6,4 nm
- taille médiane de particules (d50) 10 µm
- pH 5,7
- humidité 10,0 %
- teneur en sel soluble (Na₂SO₄) 0,7 %

### EXEMPLE 4

### Formulation du bain de couchage

La poudre de silice précipitée obtenue dans l'exemple 1 (S1) est mise en oeuvre pour la préparation de la formulation aqueuse (bain de couchage) pour impression jet d'encre suivante :

| Constituants | | Parties en poids |
|---|---|---|
| Silice précipitée | S1 | 100 |
| Alcool polyvinylique PVA | Mowiol 26/88 (*) | 50 |
| Fixateur cationique | Cartafix VXU (**) | 4 |

| | | |
|---|---|---|
| (*) commercialisé par KURARAY (**) commercialisé par CLARIANT | | |

La préparation du bain de couchage comprend les étapes suivantes :

### - Préparation d'une suspension aqueuse de silice précipitée

Une suspension aqueuse de silice précipitée est d'abord préparée sous agitation. La suspension obtenue est fluide à température ambiante et présente les caractéristiques suivantes :
- extrait sec 21,9 % en poids
- pH 4,4

La mesure de l'extrait sec est effectuée en déterminant l'écart de poids après que le milieu ait été porté à 150 °C et qu'un poids constant ait été obtenu.

### - Ajout de l'alcool polyvinylique

L'alcool polyvinylique est d'abord dissout dans l'eau ; pour cela, la température de la solution est portée à 90 °C et celle-ci est maintenue pendant 30 minutes sous agitation à cette température. Ensuite la solution est refroidie et stockée à 60 °C, puis est ajoutée à la suspension aqueuse de silice précipitée. Le mélange obtenu présente à température ambiante les caractéristiques suivantes :
- viscosité 472 mPa.s
- extrait sec 17,9 % en poids
- pH 4,9

La viscosité est déterminée en utilisant le viscosimètre Brookfield DV1+. Pour la mesure, la température du milieu est thermostatée à 20 °C (+/- 1 °C) ; la pige 3 est utilisée et une vitesse de 100 tours/minute est appliquée.

La mesure de l'extrait sec est effectuée dans les mêmes conditions que précédemment.

### - Ajout du fixateur cationique

Le fixateur cationique est enfin ajouté.

La formulation présente à température ambiante les caractéristiques suivantes :
- viscosité 490 mPa.s
- extrait sec 18 % en poids
- pH 4,8

Les mesures d'extrait sec et de viscosité sont effectuées dans les mêmes conditions que précédemment.

### Mouchage

Le papier utilisé est le papier standard Clairefontaine 160 g/m² format A4.

Le papier est déposé sur un socle de dimension 24 cm x 38 cm. Le bain de couchage est étalé manuellement sur la feuille à l'aide d'une barre filetée de Meyer n°6. La feuille est pesée avant et après couchage. La feuille est ensuite séchée en utilisant un souffleur d'air chaud.

Le poids de couche déterminé à l'aide des pesées des feuilles avant et après séchage et de l'extrait sec de la formulation est de 10,9 m²/g.

### Impression jet d'encre

L'imprimante utilisée est l'Epson Stylus Photo R321. Le paramétrage qualité « texte et image » et type « papier couché qualité photo » est sélectionné pour réaliser les impressions.

### Evaluation des feuilles imprimées

### - Poudrage

Le papier couché obtenu ne présente pas de poudrage lors de sa manipulation ou lors de son passage dans l'imprimante.

### - Séchage

Pendant et après l'impression jet d'encre, le séchage de la feuille couchée est rapide car l'encre y est rapidement absorbée.

### - Densité optique

La densité optique est mesurée à l'aide du densitomètre Gretag MacBeth D19C. La référence pour le blanc est effectuée en prenant le blanc du papier couché. Les mesures des couleurs cyan, magenta, jaune et noire sont réalisées :
- densité optique cyan 0,61
- densité optique magenta 0,92
- densité optique jaune 1,04
- densité optique noir 2,06

### - Précision

La précision de l'impression obtenue est déterminée par évaluation de l'étalement de l'encre sur le papier. Pour cela, un rectangle noir est imprimé à l'intérieur duquel on laisse une surface blanche non imprimée. Cette surface non imprimée est constituée du chiffre 2 provenant de la police Arial ; sa hauteur est de 0,5 mm. La lisibilité du chiffre 2 ainsi défini est évaluée avec l'oeil en suivant la classification suivante :
A le chiffre 2 apparaît très clairement,
B le chiffre 2 apparaît clairement,
C le chiffre 2 apparaît peu clairement,
D le chiffre 2 n'apparaît pas clairement.

Le résultat obtenu pour la feuille couchée dans les conditions précédemment définies est B.

## Revendications

1. Silice précipitée **caractérisée en ce qu'**elle présente :
- une prise d'huile DOP inférieure à 260 ml/100g,
- un volume poreux (V_{d25}), formé par les pores de diamètre inférieur à 25 nm, supérieur à 0,8 ml/g,
- une surface spécifique CTAB supérieure à 280 m²/g.

2. Silice selon la revendication 1, **caractérisée en ce qu'**elle présente un volume poreux (V_{d25}), formé par les pores de diamètre inférieur à 25 nm, supérieur à 0,9 ml/g, en particulier d'au moins 0,95 ml/g, par exemple d'au moins 1,0 ml/g.

3. Silice selon l'une des revendications 1 et 2, **caractérisée en ce qu'**elle présente une surface spécifique BET supérieure à 450 m²/g, en particulier supérieure à 510 m²/g, notamment supérieure à 540 m²/g, par exemple supérieure à 650 m²/g.

4. Silice selon l'une des revendications 1 à 3, **caractérisée en ce qu'**elle présente un diamètre de pores (dₚ), pour les pores de diamètre inférieur à 25 nm, pris au maximum de la distribution de taille de pores en volume, inférieur à 12,0 nm, en particulier inférieur à 8,0 nm, par exemple inférieur à 7,0 nm.

5. Silice selon l'une des revendications 1 à 4, **caractérisée en ce qu'**elle présente une teneur en aluminium inférieure à 2800 ppm, de préférence inférieure à 500 ppm, par exemple inférieure à 200 ppm.

6. Silice selon l'une des revendications 1 à 5, **caractérisée en ce qu'**elle présente une taille médiane de particules (d50) d'au plus 20 µm, de préférence comprise entre 0,5 et 20 µm, en particulier entre 2 et 15 µm, notamment entre 3,5 et 12 µm, par exemple entre 6 et 10,5 µm ou entre 9,5 et 10,5 µm.

7. Silice selon l'une des revendications 1 à 6, **caractérisée en ce qu'**elle présente :
- une prise d'huile DOP inférieure à 205 ml/100g,
- un volume poreux (V_{d25}), formé par les pores de diamètre inférieur à 25 nm, d'au moins 0,95 ml/g, en particulier d'au moins 1,0 ml/g,
- une surface spécifique CTAB comprise strictement entre 330 et 400 m²/g, en particulier comprise strictement entre 350 et 400 m²/g, par exemple comprise entre 355 et 390 m²/g,
- une surface spécifique BET supérieure à 510 m²/g.
- un diamètre de pores (dp), pour les pores de diamètre inférieur à 25 nm, pris au maximum de la distribution de taille de pores en volume, inférieur à 12,0 nm, en particulier inférieur à 8 nm,
- une taille médiane de particules (d50) comprise entre 6 et 10,5 µm, notamment entre 9,5 et 10,5 µm

8. Suspension aqueuse de silice précipitée, **caractérisée en ce qu'**elle comprend au moins une silice précipitée selon l'une des revendications 1 à 7.

9. Procédé de préparation d'une silice précipitée selon l'une des revendications 1 à 7, comprenant la réaction d'un silicate avec un agent acidifiant ce par quoi l'on obtient une suspension de silice précipitée, puis la séparation et le séchage de cette suspension, **caractérisé en ce que** la réaction du silicate avec l'agent acidifiant est réalisée selon les étapes successives suivantes :
(i) on forme un pied de cuve initial comportant une partie de la quantité totale du silicate engagé dans la réaction, la concentration en silicate (exprimée en SiO₂) dans ledit pied de cuve initial étant comprise entre 10 et 50 g/L, de préférence entre 12 et 48 g/L, et la température dudit pied de cuve initial étant comprise entre 40 et 65 °C,
(ii) on ajoute audit pied de cuve, de manière simultanée, de l'agent acidifiant et la quantité restante du silicate, pendant 20 à 150 minutes, le rapport quantité de silicate ajoutée (exprimée en SiO₂) / quantité de silicate présente dans le pied de cuve initial (exprimée en SiO₂) étant supérieur à 5 :
a) soit à des débits constants conduisant à l'issue de cette addition simultanée à une valeur de pH du milieu réactionnel comprise entre 3,5 et 8,5,
b) soit à un débit d'agent acidifiant régulé de manière à maintenir le pH du milieu réactionnel à une valeur constante et comprise entre 3,5 et 8,5,
(iii) on ajoute au milieu réactionnel, dans le cas où la valeur du pH du milieu réactionnel à l'issue de l'étape (ii) est supérieure à 6,0, de l'agent acidifiant, pendant 3 à 25 minutes, de manière à atteindre une valeur de pH du milieu réactionnel comprise entre 3,5 et 6,0,
(iv) on maintient le milieu réactionnel, obtenu à l'issue de l'étape précédente, sous agitation pendant 5 à 60 minutes.

10. Procédé selon la revendication 9, **caractérisé en ce qu'**il comprend, entre l'étape (i) et l'étape (ii), l'étape (i') suivante :
(i') on ajoute audit pied de cuve de l'agent acidifiant, pendant 5 à 30 minutes, jusqu'à l'obtention d'une valeur du pH du milieu réactionnel comprise entre 3,5 et 8,5.

11. Procédé selon l'une des revendications 9 et 10, **caractérisé en ce qu'**aucun électrolyte n'est ajouté dans l'étape (i).

12. Procédé selon l'une des revendications 9 à 11, **caractérisé en ce que** la séparation consiste en une filtration, suivie d'une opération de délitage du gâteau de filtration obtenu à l'issue de la filtration, un acide carboxylique étant mélangé ou ajouté audit gâteau avant ou au cours de l'opération de délitage.

13. Procédé selon l'une des revendications 9 à 12, **caractérisé en ce que** l'on broie ou on micronise la silice précipitée obtenue à l'issue de l'étape de séchage.

14. Utilisation d'une silice selon l'une des revendications 1 à 7 ou d'une suspension de silice selon la revendication 8 dans l'industrie papetière, en particulier comme charge pour papier.

15. Utilisation d'une silice selon l'une des revendications 1 à 7 ou d'une suspension de silice selon la revendication 8 comme charge de couchage pour papier, en particulier pour papier pour imprimantes à jet d'encre.

16. Bain de couchage pour papier, en particulier pour papier pour imprimantes à jet d'encre, **caractérisé en ce qu'**il comprend une silice selon l'une des revendications 1 à 7 ou une suspension de silice selon la revendication 8.

17. Procédé pour améliorer les qualités d'impression du papier **caractérisé en ce qu'**il met en oeuvre à titre de charge pour papier une silice selon l'une des revendications 1 à 7 ou une suspension de silice selon la revendication 8.

18. Utilisation d'une silice selon l'une des revendications 1 à 7 à titre de charge de couchage pour papier thermique, de charge dans la masse du papier, de support de liquide, de support de solide, notamment de support de catalyseur, d'agent absorbant et/ou masqueur d'odeur, d'agent dessiquant, d'additif pour encres, de clarificateur et/ou de stabilisateur de la bière ou du vin, d'agent anti-mottant, d'agent de mattage, d'additif pour peinture, d'agent antibloquant, d'agent antiglissant, pour la chromatographie, pour l'adsorption de liquide ou de gaz, notamment dans les filtres à cigarettes, pour la préparation de séparateurs de batterie ou pour la gélification de l'acide sulfurique.

## Claims

1. A precipitated silica, **characterized in that** it has :
- a DOP oil uptake of less than 260 ml/100 g,
- a porous volume (V_{d25}), formed by pores with a diameter of less than 25 nm, of greater than 0.8 m1/g,
- a CTAB specific surface area of greater than 280 m²/g.

2. A silica according to claim 1, **characterized in that** it has a porous volume (V_{d25}), formed by pores with a diameter of less than 25 nm, of greater than 0.9 ml/g, in particular of at least 0.95 ml/g, for example of at least 1.0 ml/g.

3. A silica according to one of claims 1 and 2, **characterized in that** it has a BET specific surface area of greater than 450 m²/g, in particular greater than 510 m²/g, especially greater than 540 m²/g, for example greater than 650 m²/g.

4. A silica according to one of claims 1 to 3, **characterized in that** it has a pore diameter (dₚ), for pores with a diameter of less than 25 nm, taken at the maximum of the distribution of pore size by volume, of less than 12.0 nm, in particular less than 8.0 nm, for example less than 7.0 nm.

5. A silica according to one of claims 1 to 4, **characterized in that** it has an aluminum content of less than 2800 ppm, preferably less than 500 ppm, for example less than 200 ppm.

6. A silica according to one of claims 1 to 5, **characterized in that** it has a median particle size (d50) of at most 20 µm, preferably between 0.5 and 20 µm, in particular between 2 and 15 µm, especially between 3.5 and 12 µm, for example between 6 and 10.5 µm or between 9.5 and 10.5 µm.

7. A silica according to one of claims 1 to 6, **characterized in that** it has :
- a DOP oil uptake of less than 205 ml/100 g,
- a porous volume (V_{d25}), formed by pores with a diameter of less than 25 nm, of at least 0.95 ml/g, in particular of at least 1.0 ml/g,
- a CTAB specific surface area of strictly between 330 and 400 m²/g, in particular strictly between 350 and 400 m²/g, for example between 355 and 390 m²/g,
- a BET specific surface area of greater than 510 m²/g,
- a pore diameter (dₚ), for pores with a diameter of less than 25 nm, taken at the maximum of the distribution of pore size by volume, of less than 12.0 nm, in particular less than 8 nm,
- a median particle size (d50) of between 6 and 10.5 µm, in particular between 9.5 and 10.5 µm.

8. An aqueous suspension of precipitated silica, **characterized in that** it comprises at least one precipitated silica according to one of claims 1 to 7.

9. A method for preparing a precipitated silica according to one of claims 1 to 7, comprising the reaction of a silicate with an acidifying agent, as a result of which a suspension of precipitated silica is obtained, and then the separation and the drying of this suspension, **characterized in that** the reaction of the silicate with the acidifying agent is carried out according to the following successive steps :
(i) an initial stock comprising a part of the total amount of the silicate used in the reaction is formed, the concentration of silicate (expressed as SiO₂) in said initial stock being between 10 and 50 g/l, preferably between 12 and 48 g/l, and the temperature of said initial stock being between 40 and 65 °C,
(ii) acidifying agent and the remaining amount of the silicate are added to said stock simultaneously, for 20 to 150 minutes, the ratio of the amount of silicate added (expressed as SiO₂) / amount of silicate present in the initial stock (expressed as SiO₂) being greater than 5 :
a) either at constant flow rates resulting, at the end of this simultaneous addition, in a reaction medium pH value of between 3.5 and 8.5,
b) or at a flow rate of acidifying agent adjusted so as to maintain the reaction medium pH at a value which is constant and between 3.5 and 8.5,
(iii) in the case where the reaction medium pH value at the end of step (ii) is greater than 6.0, acidifying agent is added to the reaction medium for 3 to 25 minutes, so as to attain a reaction medium pH value of between 3.5 and 6.0,
(iv) the reaction medium obtained at the end of the preceding step is kept stirring for 5 to 60 minutes.

10. A method according to claim 9, **characterized in that** it comprises, between step (i) and step (ii), the following step (i') :
(i') acidifying agent is added to said stock for 5 to 30 minutes, until a reaction medium pH value of between 3.5 and 8.5 is obtained.

11. A method according to one of claims 9 and 10, **characterized in that** no electrolyte is added in step (i).

12. A method according to one of claims 9 to 11, **characterized in that** the separation consists in a filtration, followed by an operation of disintegration of the filtration cake obtained at the end of the filtration, a carboxylic acid being mixed with or added to said cake before or during the disintegration operation.

13. A method according to one of claims 9 to 12, **characterized in that** the precipitated silica obtained at the end of the drying step is milled or micronized.

14. Use of a silica according to one of claims 1 to 7 or of a suspension of silica according to claim 8 in the paper industry, in particular as a filler for paper.

15. Use of a silica according to one of claims 1 to 7 or of a suspension cf silica according to claim 8 as a coating filler for paper, in particular for paper for inkjet printers.

16. A coating bath for paper, in particular for paper for inkjet printers, **characterized in that** it comprises a silica according to one of claims 1 to 7 or a suspension of silica according to claim 8.

17. A method for improving the printing qualities of paper, **characterized in that** it uses, as filler for paper, a silica according to one of claims 1 to 7 or a suspension of silica according to claim 8.

18. Use of a silica according to claims 1 to 7, as a coating filler for thermal paper, a filler in the bulk of the paper, a liquid support, a solid support, in particular a catalyst support, an absorbing agent and/or odor masker, a desiccating agent, an additive for inks, a beer or wine clarifier and/or stabilizer, an anti-caking agent, a matting agent, an additive for paint, an antiblocking agent or an antislip agent, for chromatography, for the adsorption of liquid or of gas, in particular in cigarette filters, for the preparation of battery separators or for the gelling of sulfuric acid.

## Patentansprüche

1. Gefälltes Silica, **dadurch gekennzeichnet, dass** es aufweist:
- eine DOP-Ölaufnahme von weniger als 260 ml/100g,
- ein Porenvolumen (V_{d25}), das von Poren mit einem Durchmesser von weniger als 25 nm gebildet wird, von mehr als 0,8 ml/g,
- eine spezifische CTAB-Oberfläche von mehr als 280 m²/g.

2. Silica nach Anspruch 1, **dadurch gekennzeichnet, dass** es ein Porenvolumen (V_{d25}), das von den Poren mit einem Durchmesser von weniger als 25 nm gebildet wird, von mehr als 0,9 ml/g, insbesondere von mindestens 0,95 ml/g, zum Beispiel von mindestens 1,0 ml/g aufweist.

3. Silica nach einem der Ansprüche 1 und 2, **dadurch gekennzeichnet, dass** es eine spezifische BET-Oberfläche von mehr als 450 m²/g, insbesondere mehr als 510 m²/g, speziell mehr als 540 m²/g, zum Beispiel mehr als 650 m²/g aufweist.

4. Silica nach einem der Ansprüche 1 bis 3, **dadurch gekennzeichnet, dass** es bei den Poren mit einem Durchmesser von weniger als 25 nm einen Porendurchmesser (dₚ) beim Maximum der Verteilung der Porengröße bezüglich des Volumens von weniger als 12,0 nm, insbesondere weniger als 8,0 nm, zum Beispiel weniger als 7,0 nm aufweist.

5. Silica nach einem der Ansprüche 1 bis 4, **dadurch gekennzeichnet, dass** es einen Aluminiumgehalt von weniger als 2800 ppm, vorzugsweise weniger als 500 ppm, beispielsweise weniger als 200 ppm aufweist.

6. Silica nach einem der Ansprüche 1 bis 5, **dadurch gekennzeichnet, dass** es einen Median der Teilchengröße (d50) von höchstens 20 µm, vorzugsweise zwischen 0,5 und 20 µm, insbesondere zwischen 2 und 15 µm, speziell zwischen 3,5 und 12 µm, zum Beispiel zwischen 6 und 10,5 µm oder zwischen 9,5 und 10,5 µm einschließlich aufweist.

7. Silica nach einem der Ansprüche 1 bis 6, **dadurch gekennzeichnet, dass** es aufweist:
- eine DOP-Ölaufnahme von weniger als 205 ml/100 g,
- ein Porenvolumen (V_{d25}), das durch die Poren mit einem Durchmesser von weniger als 25 nm gebildet wird, von mindestens 0,95 ml/g, insbesondere von mindestens 1,0 ml/g,
- eine spezifische CTAB-Oberfläche von genau zwischen 330 und 400 m²/g einschließlich, insbesondere genau zwischen 350 und 400 m²/g einschließlich, zum Beispiel zwischen 355 und 390 m²/g einschließlich,
- eine spezifische BET-Oberfläche von mehr als 510 m²/g,
- einen Porendurchmesser (dₚ) bei den Poren mit einem Durchmesser von weniger als 25 nm beim Maximum der Größenverteilung der Poren bezüglich des Volumens von weniger als 12,0 nm, insbesondere weniger als 8 nm,
- einen Median der Teilchengröße (d50) zwischen 6 und 10,5 µm, insbesondere zwischen 9,5 und 10,5 µm einschließlich.

8. Wässrige Suspension von gefälltem Silica, **dadurch gekennzeichnet, dass** sie mindestens ein gefälltes Silica nach einem der Ansprüche 1 bis 7 umfasst.

9. Verfahren zur Herstellung eines gefällten Silicas nach einem der Ansprüche 1 bis 7, umfassend die Umsetzung eines Silicats mit einem Ansäuerungsmittel, wodurch man eine Suspension von gefälltem Silica erhält, dann die Auftrennung und das Trocknen dieser Suspension, **dadurch gekennzeichnet, dass** die Umsetzung des Silicats mit dem Ansäuerungsmittel gemäß den folgenden aufeinanderfolgenden Schritten durchgeführt wird:
(i) man bildet einen anfänglichen Ansatz, der einen Teil der Gesamtmenge des in der Reaktion eingesetzten Silicats umfasst, wobei die Silicatkonzentration (ausgedrückt als SiO₂) in dem anfänglichen Ansatz zwischen 10 und 50 g/l einschließlich, vorzugsweise zwischen 12 und 48 g/l einschließlich, beträgt und die Temperatur des anfänglichen Ansatzes zwischen 40 und 65 °C einschließlich beträgt,
(ii) man gibt zu dem Ansatz über 20 bis 150 Minuten gleichzeitig das Ansäuerungsmittel und die verbleibende Menge des Silicats, wobei das Verhältnis von hinzugefügter Silicatmenge (ausgedrückt als SiO₂)/Silicat, das in dem anfänglichen Ansatz vorliegt (ausgedrückt als SiO₂) über 5 beträgt:
a) entweder mit konstanten Zuflüssen, was am Ende dieser gleichzeitigen Zugabe zu einem pH-Wert des Reaktionsmediums zwischen 3,5 und 8,5 einschließlich führt,
b) oder mit einer Zugabe des Ansäuerungsmittels, die auf solche Weise reguliert wird, dass der pH des Reaktionsmediums bei einem konstanten Wert und zwischen 3,5 und 8,5 einschließlich gehalten wird,
(iii) man gibt zu dem Reaktionsmedium in dem Fall, in dem der pH-Wert des Reaktionsmediums am Ende des Schritts (ii) über 6,0 liegt, über 3 bis 25 Minuten das Ansäuerungsmittel auf solche Weise zu, dass ein pH-Wert des Reaktionsmediums zwischen 3,5 und 6,0 einschließlich erreicht wird,
(iv) man hält das Reaktionsmedium, das am Ende des vorangehenden Schritts erhalten wird, 5 bis 60 Minuten unter Rühren.

10. Verfahren nach Anspruch 9, **dadurch gekennzeichnet, dass** es zwischen dem Schritt (i) und dem Schritt (ii) den folgenden Schritt (i') umfasst:
(i') man gibt zu dem Ansatz über 5 bis 30 Minuten Ansäuerungsmittel bis zum Erhalt eines pH-Werts des Reaktionsmediums zwischen 3,5 und 8,5 einschließlich.

11. Verfahren nach einem der Ansprüche 9 und 10, **dadurch gekennzeichnet, dass** im Schritt (i) keinerlei Elektrolyt hinzugefügt wird.

12. Verfahren nach einem der Ansprüche 9 bis 11, **dadurch gekennzeichnet, dass** die Auftrennung aus einer Filtration besteht, gefolgt von einer Aufschlämmung des am Ende der Filtration erhaltenen Filterkuchens mit Wasser, wobei vor oder im Verlauf des Aufschlämmungsvorgangs eine Carbonsäure in den Kuchen eingemischt oder zu diesem hinzugefügt wird.

13. Verfahren nach einem der Ansprüche 9 bis 12, **dadurch gekennzeichnet, dass** man das am Ende des Trocknungsschritts erhaltene gefällte Silica mahlt oder mikronisiert.

14. Verwendung eines Silicas nach einem der Ansprüche 1 bis 7 oder einer Silica-Suspension nach Anspruch 8 in der Papierindustrie, insbesondere als Füllstoff für Papier.

15. Verwendung eines Silicas nach einem der Ansprüche 1 bis 7 oder einer Silica-Suspension nach Anspruch 8 als Füllstoff für ein Kaschierungsmittel für Papier, insbesondere für Papier für den Tintenstrahldruck.

16. Kaschierungsbad für Papier, insbesondere für Papier für den Tintenstrahldruck, **dadurch gekennzeichnet, dass** es ein Silica einem der Ansprüche 1 bis 7 oder eine Silica-Suspension nach Anspruch 8 umfasst.

17. Verfahren zur Verbesserung der Druckqualitäten von Papier, **dadurch gekennzeichnet, dass** es als Füllstoff für Papier ein Silica einem der Ansprüche 1 bis 7 oder eine Silica-Suspension nach Anspruch 8 verwendet.

18. Verwendung eines Silicas nach einem der Ansprüche 1 bis 7 als Kaschierungsfüllstoff für Thermopapier, als Füllstoff in der Papiermasse, als Flüssigkeitsträger, als Feststoffträger, insbesondere als Katalysatorträger, als Absorptionsmittel und/oder Geruchsmaskierungsmittel, als Trocknungsmittel, als Additiv für Tinten, als Klärungsmittel und/oder Stabilisierungsmittel für Bier oder Wein, als Antiverklumpungsmittel, als Mattierungsmittel, als Anstrichmittelzusatz, als Antiblockingmittel, als Antigleitmittel, für die Chromatographie, für die Adsorption von Flüssigkeit oder Gas, insbesondere in Filterzigaretten, für die Herstellung von Batterieseparatoren oder für die Gelierung von Schwefelsäure.
